# EUROPEAN PATENT APPLICATION

(11) **EP 2 863 354 A1**
(43) Date of publication of application: **22.04.2015**
(21) Application number: 14189049.1
(22) Date of filing: 15.10.2014
(51) Int. Cl.: G06Q 30/00, G06Q 30/06

(54) **Apparatus and method for providing genuine certification service**

(30) Priority: 15.10.2013 KR 20130122334
(71) Applicant: Penta Security Systems, Inc., Seoul 150-949 (KR)
(72) Inventor: Lee, Seok Woo, 100-835 Seoul (KR); Sim, Sang Gyoo, 156-723 Seoul (KR); Kim, Duk Soo, 120-866 Seoul (KR); Joo, Gi Young, 689-841 Ulsan (KR)
(74) Representative: Zimmermann, Tankred Klaus

(57) **Abstract**

Provided are an apparatus and method for providing a genuine certification service. The apparatus includes a certification information issuing unit configured to issue genuine certification information including at least one piece of certification chip identification (ID) information, product ID information, certification secret information, and certification verification information to a verification target product in response to an issuance request by a terminal operated by a producer of the verification target product, and a genuine certification executing unit configured to verify validity of the genuine certification information issued to the verification target product and execute genuine certification for the verification target product using the genuine certification information of which the validity is verified in response to a certification request by the terminal operated by the producer of the verification target product. Intellectual property rights of producers may be efficiently protected and a reliable genuine certification service may be provided to consumers.

## Description

### CLAIM FOR PRIORITY

This application claims priority to Korean Patent Application No. 10-2013-0122334 filed on October 15, 2013 in the Korean Intellectual Property Office (KIPO), the entire contents of which are hereby incorporated by reference.

### BACKGROUND

### 1. Technical Field

Example embodiments of the present invention relate in general to the field of genuine certification technology and more specifically to a genuine certification service providing apparatus and method for providing a genuine certification service for a verification target product.

### 2. Related Art

With the recent development of scientific technologies, there is a trend that counterfeit problems mainly occurring in luxury goods brands or brand name products have been spread to illegal reproduction and illegal release problems in electronic elements, mechanical elements of automobiles and airplanes, hardware products mounted on electronic devices, and software products implemented in the electronic devices.

Because the field and scope of counterfeit products arc spread and illegal release of the counterfeit products increases as described above, producers are studying genuine certification technology for preventing the tangible/intangible damage from being caused due to counterfeit products to apply the genuine certification technology to the products.

For example, producers of luxury goods brands or brand name products prevent the counterfeit of products by marking or attaching trademarks, marks, logos, and holograms on or to the products so as to prevent their products from being copied and released by others and give reliance for genuine products to consumers.

In addition, producers of electronic elements, mechanical elements, and hardware prevent the counterfeit of products by allocating a manufacturing number to a manufactured product and a test product. Further, a producer of software prevents illegally copied goods from being released and used when products are installed or used by causing a consumer to input a serial number by assigning a unique serial number or product key to the product.

However, because the products may be easily copied due to the recent spread of the development and spread of color copiers, color scanners, and three-dimensional (3D) printers, trademarks, marks, logos, and holograms marked on or attached to the products have a limitation to prevent the release and use of the counterfeits.

In addition, in a certification method of causing the consumer to input a unique serial number or product key when a product is installed or used, there is a limit to prevent the tangible/intangible damage of the producer because the serial number is illegally copied or arbitrarily generated.

Therefore, technology for embedding a micro certification chip on which an electronic tag such as a near field communication (NFC) tag or a radio frequency identification (RFID) tag is recorded in a product and executing genuine certification for the product through wireless communication with the micro certification chip using a mobile communication terminal having an NFC function has been proposed.

However, it is difficult to embed the micro certification chip in a product according to characteristics of the product or smoothly perform information exchange between the information communication terminal and the micro certification chip in the genuine certification technology.

In particular, there is a problem in that it is difficult to commercialize a product in which the micro chip is embedded because position information of the product included in the electronic tag is maliciously available.

### SUMMARY

Accordingly, example embodiments of the present invention are provided to substantially obviate one or more problems due to limitations and disadvantages of the related art.

Example embodiments of the present invention provide a genuine certification service providing apparatus that is relatively cost-effective as compared to conventional genuine certification technology and may flexibly execute genuine certification for a verification target product regardless of characteristics of the verification target product or a business structure.

Example embodiments of the present invention also provide a genuine certification service providing method in which intellectual property rights of producers may be efficiently protected and simultaneously a reliable genuine certification service may be provided to consumers.

In some example embodiments, an apparatus for providing a genuine certification service includes: a certification information issuing unit configured to issue genuine certification information including at least one piece of certification-chip ID information, product ID information, certification secret information, and certification verification information to a verification target product in response to an issuance request by a terminal operated by a producer of the verification target product; and a genuine certification executing unit configured to verify validity of the genuine certification information issued to the verification target product and execute genuine certification for the verification target product using the genuine certification information of which the validity is verified in response to a certification request by the terminal operated by the producer of the verification target product.

Here, the certification information issuing unit may issue the genuine certification information to the verification target product by generating the genuine certification information including the at least one piece of the certification-chip ID information for a certification chip embedded in the verification target product, the product ID information for the verification target product, the certification secret information to be used to execute the genuine certification, and the certification verification information generated by determining whether the certification secret information is counterfeit.

Here, the genuine certification executing unit may verify the validity of the genuine certification information by checking whether integrity and confidentiality of the genuine certification information issued to the verification target product is ensured.

Here, the apparatus may further include: a certification verifying unit configured to re-verify the validity of the genuine certification information by monitoring use of the genuine certification information of which the validity is verified through the genuine certification executing unit and checking whether integrity and confidentiality of the genuine certification information are ensured.

Here, when the genuine certification is attempted using the same genuine certification information in a plurality of verification target products, the certification verifying unit may determine the plurality of verification target products as counterfeits and determine that the validity of the genuine certification information used in the plurality of verification target products is lost.

Here, the certification verifying unit may re-verify the validity of the genuine certification information by collecting a genuine certification history for the verification target product, analyzing the collected genuine certification history, and determining whether the verification target product is genuine.

Here, the apparatus may further include: a certification service providing unit configured to execute the genuine certification for the verification target product and provide a consumer of the verification target product with a result of determining whether the verification target product is genuine or counterfeit.

In other example embodiments, a method of providing a genuine certification service includes: issuing genuine certification information including at least one piece of certification-chip ID information, product ID information, certification secret information, and certification verification information to a verification target product in response to an issuance request by a terminal operated by a producer of the verification target product; and verifying validity of the genuine certification information issued to the verification target product and executing genuine certification for the verification target product using the genuine certification information of which the validity is verified in response to a certification request by the terminal operated by the producer of the verification target product.

Here, the method further includes: re-verifying the validity of the genuine certification information by monitoring use of the genuine certification information of which the validity is verified and checking whether integrity and confidentiality of the genuine certification information are ensured.

Here, the method further includes: executing the genuine certification for the verification target product and providing a consumer of the verification target product with a result of determining whether the verification target product is genuine or counterfeit.

The apparatus and method for providing a genuine certification service according to the example embodiments of the present invention as described above are relatively cost-effective as compared to conventional genuine certification technology. In the apparatus and method, it is possible to flexibly execute genuine certification for a verification target product regardless of characteristics of the verification target product or a business structure.

Also, it is possible to efficiently protect intellectual property rights of producers and simultaneously provide a reliable genuine certification service to consumers.

### BRIEF DESCRIPTION OF DRAWINGS

Example embodiments of the present invention will become more apparent by describing in detail example embodiments of the present invention with reference to the accompanying drawings, in which:
FIG. 1 is an exemplary diagram illustrating an operation environment of an apparatus and method for providing a genuine certification service according to an example embodiment of the present invention;
FIG. 2 is a block diagram illustrating the genuine certification service providing apparatus according to an example embodiment of the present invention;
FIG. 3 is a block diagram illustrating issuance of genuine certification information according to an example embodiment of the present invention;
FIG. 4 is a flowchart illustrating the genuine certification service providing method according to an example embodiment of the present invention;
FIG. 5 is a flowchart illustrating issuance of genuine certification information according to an example embodiment of the present invention; and
FIG. 6 is a flowchart illustrating a process of executing genuine certification for a verification target product according to an example embodiment of the present invention.

### DESCRIPTION OF EXAMPLE EMBODIMENTS

Example embodiments of the present invention are described below in sufficient detail to enable those of ordinary skill in the art to embody and practice the present invention. It is important to understand that the present invention may be embodied in many alternate forms and should not be construed as limited to the example embodiments set forth herein.

Accordingly, while the invention can be modified in various ways and take on various alternative forms, specific embodiments thereof are shown in the drawings and described in detail below as examples. There is no intent to limit the invention to the particular forms disclosed. On the contrary, the invention is to cover all modifications, equivalents, and alternatives falling within the spirit and scope of the appended claims. Elements of the example embodiments are consistently denoted by the same reference numerals throughout the drawings and detailed description.

It will be understood that, although the terms first, second, A, B, etc. may be used herein in reference to elements of the invention, such elements should not be construed as limited by these terms. For example, a first element could be termed a second element, and a second element could be termed a first element, without departing from the scope of the present invention. Herein, the term "and/or" includes any and all combinations of one or more referents.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements. Other words used to describe relationships between elements should be interpreted in a like fashion (i.e., "between" versus "directly between," "adjacent" versus "directly adjacent," etc.).

The terminology used herein to describe embodiments of the invention is not intended to limit the scope of the invention. The articles "a," "an," and "the" are singular in that they have a single referent, however the use of the singular form in the present document should not preclude the presence of more than one referent. In other words, elements of the invention referred to in the singular may number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art to which this invention belongs. It will be further understood that terms in common usage should also be interpreted as is customary in the relevant art and not in an idealized or overly formal sense unless expressly so defined herein.

Hereinafter, preferred embodiments of the present invention will be described in more detail with reference to the accompanying drawings.

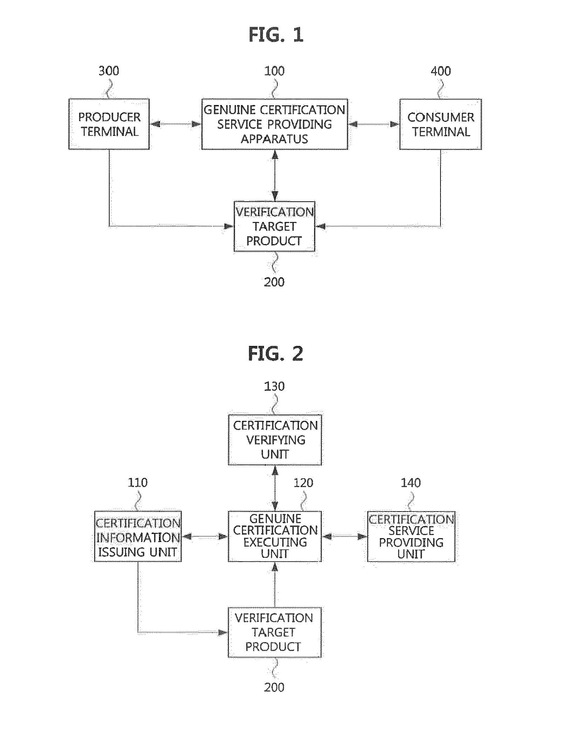

FIG. 1 is an exemplary diagram illustrating an operation environment of an apparatus and method for providing a genuine certification service according to an example embodiment of the present invention.

Referring to FIG. 1, the genuine certification service providing apparatus and method may be implemented by connecting a terminal 300 operated by a producer of a verification target product, the verification target product 200 produced by the producer of the verification target product, and a terminal 400 operated by a consumer of the verification target product.

Hereinafter, the terminal operated by the producer of the verification target product is referred to as a "producer terminal 300" for convenience of description and the terminal operated by the consumer of the verification target product is referred to as a "consumer terminal 400" for convenience of description.

The genuine certification service providing apparatus 100 includes a communication device capable of exchanging information with the producer terminal 300 and the consumer terminal 400, and may represent an information processing device such as a computer, a notebook computer, a smartphone, a tablet personal computer (PC), or a personal digital assistant (PDA) having an information processing function of processing information received through the communication device. Here, the information processing device may include an NFC function of enabling communication with a micro certification chip embedded in the verification target product 200.

Also, although the genuine certification service providing apparatus 100 may be implemented in the form of software such as an application or a webpage which operates in a web server or a cloud server, the present invention is not limited thereto.

Although the verification target product 200 may include a product to which ID information such as a trademark, a mark, a logo, and a hologram is attached, a product in which a micro certification chip recording an electronic tag such as an NFC tag or an RFID tag is embedded, a hardware product constituting an information processing device, and a software product implemented in the information processing device, the present invention is not limited thereto and is applicable to all products produced by intellectual activities of the producer.

The producer terminal 300 may include a terminal operated by the producer of the verification target product 200 and a terminal operated by a certification-chip producer who produces a micro certification chip embedded in the verification target product 200.

Specifically, although the producer terminal 300 may represent a server having an input/output function, a communication function, an information processing function, and an information storage function so that the verification target product 200 in which a micro certification chip is embedded may be managed or an information processing device such as a computer, a notebook computer, a smartphone, a tablet PC, or a PDA, the present invention is not limited thereto.

Although the consumer terminal 400 serves as a terminal operated by the consumer who purchases and uses the verification target product 200 and may represent an information processing device such as a computer, a notebook computer, a smartphone, a tablet PC, or a PDA having an input/output function and a communication function so as to request the genuine certification service providing apparatus 100 to provide the genuine certification server for the verification target product 200 and receive the genuine certification service, the present invention is not limited thereto.

Here, the genuine certification service providing apparatus 100, at least one verification target product 200, the producer terminal 300, and the consumer terminal 400 are connected to wired/wireless networks such as a universal serial bus (USB), Bluetooth, wireless fidelity (Wi-Fi), third generation (3G), and long term evolution (LTE), and can exchange information for genuine certification of the verification target product 200.

FIG. 2 is a block diagram illustrating the genuine certification service providing apparatus according to an example embodiment of the present invention.

Referring to FIG. 2, the genuine certification service providing apparatus 100 may be implemented to include a certification information issuing unit 110 and a genuine certification executing unit 120.

In addition, the genuine certification service providing apparatus 100 may further include a certification verifying unit 130 and a certification service providing unit 140.

At this time, the certification information issuing unit 110, the genuine certification executing unit 120, the certification verifying unit 130, and the certification service providing unit 140 may be implemented by one device or independent devices to exchange information through wired/wireless networks.

The certification information issuing unit 110 may generate genuine certification information according to reception of a genuine certification information issuance request from the producer terminal 300 and issue the generated genuine certification information to the verification target product 200.

At this time, the certification information issuing unit 110 may represent a certification server managed by a public certification authority which issues the genuine certification information to the verification target product 200.

In addition, although the certification information issuing unit 110 may represent an information processing device constituted of a receiving device configured to receive the issuance request from the producer terminal 300, a calculating device configured to generate the genuine certification information for the verification target product 200 corresponding to the received issuance request, and a transmitting device configured to issue the genuine certification information to the verification target product 200, the present invention is not limited thereto.

Here, the genuine certification information may include at least one piece of certification-chip ID information, product ID information, certification secret information, and certification verification information, and may be recorded in the form of the electronic tag such as the NFC tag or the RFID tag in the micro certification chip embedded in the verification target product 200.

The certification-chip ID information may be preset by a genuine certification-chip producer as ID information for the micro certification chip embedded in the verification target product 200 or may include a serial number or ID unique to a genuine certification chip assigned from the certification information issuing unit 110.

The product ID information may include a classification system or classification code preset in correspondence with a type of the verification target product 200, a date and time at which the verification target product 200 is produced, and ID information such as a unique ID or an Internet protocol (IP) address of the information processing device in which the verification target product 200 is implemented.

The certification secret information may represent encryption information such as an encryption key, an electronic signature key, and a password to be used in a standard encryption algorithm such as an advanced encryption standard (AES) or Rivest Shamir Adleman (RSA) for encrypting information to be used for executing genuine certification.

Also, the certification secret information may be generated by directly encrypting information to be used for executing the genuine certification using the encryption algorithm.

The certification verification information may be used to determine whether the certification secret information is counterfeited by verifying whether integrity and confidentiality of the certification secret information are ensured.

The genuine certification executing unit 120 verifies validity of the genuine certification information issued to the verification target product 200 and receives a genuine certification request for the verification target product 200 from the consumer terminal 400, thereby executing the genuine certification for the verification target product 200 using the verified genuine certification information of which the validity is verified.

Specifically, the genuine certification executing unit 120 may verify the validity of the genuine certification information by checking whether the integrity and confidentiality of the genuine certification information issued to the verification target product 200 are ensured.

At this time, although the genuine certification executing unit 120 may verify the validity of the genuine certification information offline by requesting the consumer terminal 400 to verify the validity of the genuine certification information, the present invention is not limited thereto.

Accordingly, the genuine certification executing unit 120 may be implemented by an information processing device including a communication function of transmitting/receiving the genuine certification information and an information processing function of verifying the validity of the genuine certification information and executing the genuine certification for the verification target product 200.

Only, the genuine certification information may be lost or leaked while the genuine certification information is transferred through a network even when the genuine certification of the verification target product 200 is executed using the genuine certification information of which the validity is verified. When the genuine certification executing unit 120 configured to execute the genuine certification is lost by a malicious attack, any genuine certification information of which the validity is verified may be counterfeited.

Therefore, the certification verifying unit 130 may re-verify the validity of the genuine certification information by monitoring the use of genuine certification information of which the validity is verified through the genuine certification executing unit 120 and checking whether the integrity and confidentiality of the genuine certification information are maintained.

At this time, although the certification verifying unit 130 may be connected to the consumer terminal 400 or the verification target product 200 through the network to re-verify the genuine certification information online, the present invention is not limited thereto.

If the genuine certification is attempted using the same genuine certification information in a plurality of verification target products as a result of monitoring the use of genuine certification information of which the validity is verified, it may be determined that the plurality of verification target products are counterfeits and the validity of the genuine certification information used in the plurality of verification target products is lost.

In addition, it is possible to re-verify the validity of the genuine certification information by collecting a genuine certification history for the verification target product 200, analyzing the collected genuine certification history, and determining whether the verification target product 200 is genuine.

Here, the genuine certification history may include the genuine certification information issued to the verification target product 200, a date and time on which the genuine certification is executed, and execution position or ID information about an apparatus for executing the genuine certification.

For example, when the genuine certification is executed on the verification target product 200 a plurality of times, it is possible to determine whether the verification target product 200 is genuine by calculating an execution time difference between genuine certifications executed on the verification target product 200 and an execution distance difference between the genuine certifications and determining whether distance movement according to the execution time difference between the genuine certifications is appropriate.

Therefore, when it is determined that the verification target product 200 is genuine, it may be determined that the integrity and confidentiality of the genuine certification information issued to the verification target product 200 are ensured. When it is determined that the verification target product 200 is a counterfeit, it may be determined that the integrity and confidentiality of the genuine certification information issued to the verification target product 200 are lost.

Here, the certification verifying unit 130 may be implemented by a verifying server or an information processing device having a communication function in which communication with the consumer terminal 400 or the verification target product 200 is possible and an information processing function of re-verifying the validity of the genuine certification information, analyzing a genuine certification history, and determining a counterfeit.

The certification service providing unit 140 may provide the consumer of the verification target product 200 of a result of determining whether the verification target product 200 is genuine or counterfeit by the genuine certification executing unit 120.

Here, the certification service providing unit 140 may be implemented in the form of software such as a webpage or application for providing a genuine certification service for the verification target product 200 to the consumer of the verification target product 200.

Specifically, for example, the certification service providing unit 140 may be extended to provide online additional services in various types such as customer relation management (CRM) for supporting a service according to characteristics of a consumer, supply chain management (SCM) for integrating and managing a process of producing and releasing products, and license management for providing information about products possessed by consumers and a present condition of possession.

Here, although the online additional service may provide a genuine certification service for the verification target product 200 in which the genuine certification chip is embedded to the consumer of the verification target product 200 and include a business model for allowing a producer and a distributor of the verification target product 200 to register and update information about the verification target product 200, the present invention is not limited thereto.

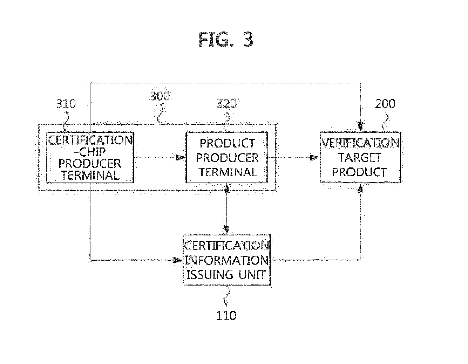

FIG. 3 is a block diagram illustrating issuance of the genuine certification information according to an example embodiment of the present invention.

Referring to FIG. 3, the genuine certification information may be generated by the certification information issuing unit 110 according to an issuance request of the producer terminal 300 and issued to the verification target product 200.

Here, the producer terminal 300 may include a terminal operated by a certification-chip producer for producing a micro certification chip embedded in the verification target product 200 and a terminal operated by a producer for receiving a certification chip and producing a product.

Hereinafter, for convenience of description, the terminal operated by a certification-chip producer for producing the micro certification chip embedded in the verification target product 200 is referred to as a "certification-chip producer terminal 310" and the terminal operated by the producer for receiving the certification chip and producing the product is referred to as a "product producer terminal 320."

The certification-chip producer terminal 310 may preset and record certification-chip ID information including a serial number or ID unique to the certification chip at the time of producing the certification chip or receive and record the certification-chip ID information issued from the certification information issuing unit 110.

In addition, the product producer terminal 320 may receive product ID information corresponding to the verification target product 200 by requesting the certification information issuing unit 110 to provide the product ID information. At this time, the product ID information may include a classification system or classification code preset according to a type of the verification target product 200, a date and time at which the verification target product 200 is produced, and ID information such as a unique ID.

For example, when the certification-chip producer terminal 310 pre-records certification-chip ID information on the genuine certification chip, the product producer terminal 320 may generate the product ID information based on the certification-chip ID information pre-recorded on the genuine certification chip to provide the generated product ID information to the certification information issuing unit 110 and the certification information issuing unit 110 may generate genuine certification information including the certification secret information and the certification verification information based on the received product ID information to issue the generated genuine certification information to the verification target product 200.

In addition, when the certification-chip producer terminal 310 receives the certification-chip ID information issued from the certification information issuing unit 110 by requesting the certification information issuing unit 110 to issue the certification-chip ID information, the product producer terminal 320 may generate product ID information based on the certification-chip ID information recorded on the genuine certification chip to provide the generate product ID information to the certification information issuing unit 110 and the certification information issuing unit 110 may generate genuine certification information including the certification secret information and the certification verification information based on the received product ID information to issue the generated genuine certification information to the verification target product 200.

If the product producer terminal 320 requests the certification information issuing unit 110 to issue product ID information, the certification information issuing unit 110 may generate product ID information based on certification-chip ID information mounted on the verification target product and provide the product producer terminal 320 with the product ID information.

At this time, the product producer terminal 320 may directly issue the product ID information received from the certification information issuing unit 110 to the verification target product 200 and the certification information issuing unit 110 may generate certification secret information and certification verification information based on the certification-chip ID information and the product ID information and issue the certification secret information and the certification verification information to the verification target product 200.

As described above, the certification information issuing unit 110 may generate and provide the certification-chip ID information and the product ID information according to a request of the certification-chip producer terminal 310 or the product producer terminal 320, generate genuine certification information including the certification-chip ID information, the product ID information, the certification secret information, and the certification verification information, and issue the generated genuine certification information to the verification target product 200.

Here, the certification secret information may represent encryption information such as an encryption key, an electronic signature key, and a password to be used in a standard encryption algorithm such as an AES or RSA for encrypting information to be used for executing genuine certification.

Also, the certification secret information may be generated by directly encrypting information to be used for executing the genuine certification using the encryption algorithm.

The certification verification information may be used to determine whether the certification secret information is counterfeited by verifying whether integrity and confidentiality of the certification secret information are ensured.

That is, because the genuine certification information issued from the certification information issuing unit 110 to the verification target product 200 includes the certification secret information and the certification verification information so as to prevent the certification-chip ID information and the product ID information from being counterfeited and illegally used, it is possible to improve reliability for the verification target product 200.

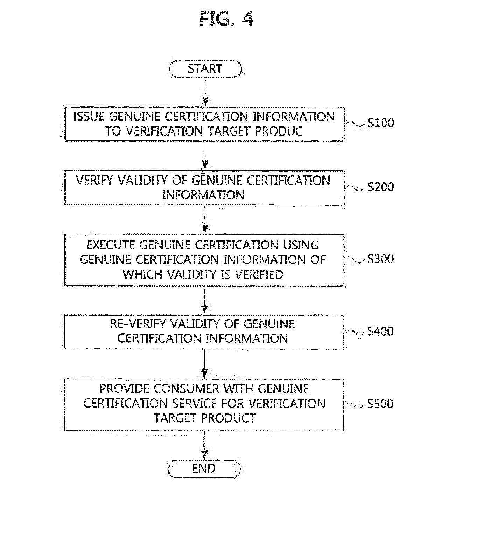

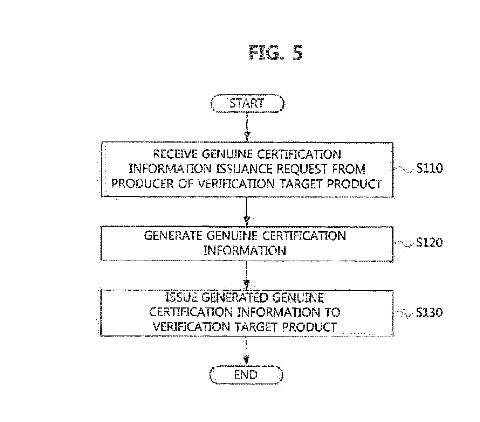

FIG. 4 is a flowchart illustrating the genuine certification service providing method according to an example embodiment of the present invention, and FIG. 5 is a flowchart illustrating issuance of genuine certification information according to an example embodiment of the present invention.

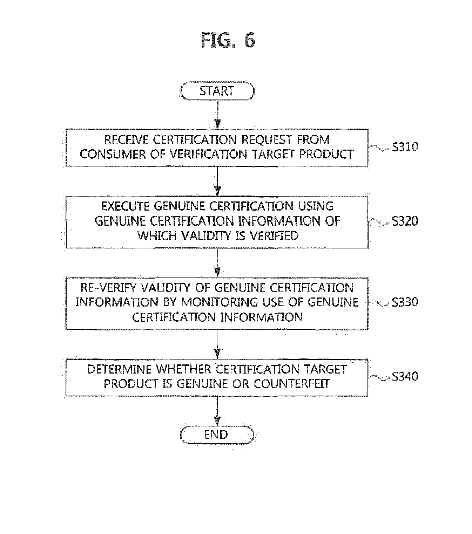

Also, FIG. 6 is a flowchart illustrating a process of executing genuine certification for a verification target product according to an example embodiment of the present invention.

Referring to FIGS. 4 to 6, the genuine certification service providing method may include the step S100 of issuing genuine certification information to the verification target product 200, the step S200 of verifying validity of the issued genuine certification information, and the step S300 of executing the genuine certification using the verified genuine certification information of which the validity is verified.

In addition, the genuine certification service providing method may further include the step S400 of re-verifying the validity of the genuine certification information and the step S500 of executing the genuine certification and providing a genuine certification service for the verification target product 200 to the consumer of the verification target product 200.

At this time, the genuine certification service providing method may be performed by the genuine certification service providing apparatus 100.

The genuine certification service providing apparatus 100 includes a communication device capable of exchanging information with the producer terminal 300 and the consumer terminal 400, and may represent an information processing device such as a computer, a notebook computer, a smartphone, a tablet PC, or a PDA having an information processing function of processing information received through the communication device.

Here, the information processing device may include an NFC function of enabling communication with a micro certification chip embedded in the verification target product 200.

As illustrated in FIG. 5, upon receiving an issuance request from the producer of the verification target product 200 (S110), the genuine certification information may be generated (S120) and the generated genuine certification information may be issued to the verification target product 200 (S130).

Here, the genuine certification information may include at least one piece of the certification-chip ID information, the product ID information, the certification secret information, and the certification verification information.

The certification-chip ID information may be preset by a genuine certification-chip producer as ID information for the micro certification chip embedded in the verification target product 200 or may include a serial number or ID unique to a genuine certification chip according to an issuance request of the genuine certification chip producer.

The product ID information may include a classification system or classification code preset according to a type of the verification target product 200, a date and time at which the verification target product 200 is produced, and unique ID information such as a unique ID or an IP address of the information processing device in which the verification target product 200 is implemented.

The certification secret information may represent encryption information such as an encryption key, an electronic signature key, and a password to be used in a standard encryption algorithm such as an AES or RSA for encrypting information to be used for executing genuine certification.

Also, the certification secret information may be generated by directly encrypting information to be used for executing the genuine certification using the encryption algorithm.

The certification verification information may be used to determine whether the certification secret information is counterfeited by verifying whether integrity and confidentiality of the certification secret information are ensured.

Therefore, if the genuine certification information is issued to the verification target product 200 (S100), validity of the genuine certification information issued to the verification target product 200 may be verified (S200) and the genuine certification for the verification target product 200 may be executed using the verified genuine certification information of which the validity is verified according to a certification request by the consumer terminal 400 (S300).

At this time, although the validity of the genuine certification information may be verified by checking the integrity and confidentiality of the genuine certification information issued to the verification target product 200 or the validity of the genuine certification information may be verified offline by requesting the consumer terminal 400 to verify the validity of the genuine certification information (S200), the present invention is not limited thereto.

Therefore, as illustrated in FIG. 6, according to the reception of a certification request from the consumer of the verification target product 200 (S310), it is possible to determine whether the verification target product is genuine or counterfeit (S340) by executing the genuine certification using the genuine certification information of which the validity is verified (S320) and monitoring the use of the genuine certification information and re-verifying the validity of the genuine certification information (S330).

At this time, the reason the genuine certification is re-verified is that the genuine certification information may be lost or changed while the genuine certification information is transferred through a network even when the genuine certification of the verification target product 200 is executed using the genuine certification information of which the validity is verified and an device for executing the genuine certification may be lost by a malicious attack, so that the genuine certification information may be counterfeited while the genuine certification is executed.

Accordingly, it is possible to re-verify the validity of the genuine certification information by checking whether the integrity and confidentiality of the genuine certification information is ensured (S330). At this time, although the genuine certification information may be re-verified online by establishing a connection to the consumer terminal 400 or the verification target product 200 through the network, the present invention is not limited thereto.

For example, if the genuine certification is attempted using the same genuine certification information in a plurality of verification target products, it may be determined that the plurality of verification target products are counterfeits and the validity of the genuine certification information used in the plurality of verification target products is lost.

In addition, it is possible to re-verify the validity of the genuine certification information by collecting a genuine certification history for the verification target product 200, analyzing the collected genuine certification history, and determining whether the verification target product 200 is genuine.

Here, the genuine certification history may include the genuine certification information issued to the verification target product 200, a date and time on which the genuine certification is executed, and execution position or ID information about the device for executing the genuine certification.

For example, when the genuine certification is executed on the verification target product 200 a plurality of times, it is possible to determine whether the verification target product 200 is genuine by calculating an execution time difference between genuine certifications executed on the verification target product 200 and an execution distance difference between the genuine certifications and determining whether distance movement according to the execution time difference between the genuine certifications is appropriate.

Therefore, when it is determined that the verification target product 200 is genuine, it may be determined that the integrity and confidentiality of the genuine certification information issued to the verification target product 200 is ensured. When it is determined that the verification target product 200 is a counterfeit, it may be determined that the integrity and confidentiality of the genuine certification information issued to the verification target product 200 are lost.

A result of determining whether the verification target product 200 is genuine or counterfeit may be provided to the consumer of the verification target product 200 (S500).

For example, the consumer of the verification target product 200 may receive the genuine certification service through online additional services in various types such as CRM for supporting a service according to characteristics of a consumer, SCM for integrating and managing a process of producing and releasing products, and license management for providing information about products possessed by consumers and a present condition of possession.

Here, although the online additional service may provide a genuine certification service for the verification target product 200 in which the genuine certification chip is embedded to the consumer of the verification target product 200 and include a business model for allowing a producer and a distributor of the verification target product 200 to register and update information about the verification target product 200, the present invention is not limited thereto.

The apparatus and method for providing a genuine certification service according to the example embodiments of the present invention as described above are relatively cost-effective as compared to conventional genuine certification technology. In the apparatus and method, it is possible to flexibly execute genuine certification for a verification target product regardless of characteristics of the verification target product or a business structure.

Also, it is possible to efficiently protect intellectual property rights of producers and simultaneously provide a reliable genuine certification service to consumers.

While the example embodiments of the present invention and their advantages have been described in detail, it should be understood that various changes, substitutions and alterations may be made herein without departing from the scope of the invention.

## Claims

1. An apparatus for providing a genuine certification service, comprising:
a certification information issuing unit configured to issue genuine certification information including at least one piece of certification chip identification (ID) information, product ID information, certification secret information, and certification verification information to a verification target product in response to an issuance request by a terminal operated by a producer of the verification target product; and
a genuine certification executing unit configured to verify validity of the genuine certification information issued to the verification target product and execute genuine certification for the verification target product using the genuine certification information of which the validity is verified in response to a certification request by the terminal operated by the producer of the verification target product.

2. The apparatus of claim 1, wherein the certification information issuing unit issues the genuine certification information to the verification target product by generating the genuine certification information including the at least one piece of the certification-chip ID information for a certification chip embedded in the verification target product, the product ID information for the verification target product, the certification secret information to be used to execute the genuine certification, and the certification verification information generated by determining whether the certification secret information is counterfeit.

3. The apparatus of claim 2, wherein the genuine certification executing unit verifies the validity of the genuine certification information by checking whether integrity and confidentiality of the genuine certification information issued to the verification target product is ensured.

4. The apparatus of claim 1, further comprising:
a certification verifying unit configured to re-verify the validity of the genuine certification information by monitoring use of the genuine certification information of which the validity is verified through the genuine certification executing unit and checking whether integrity and confidentiality of the genuine certification information are ensured.

5. The apparatus of claim 4, wherein, when the genuine certification is attempted using the same genuine certification information in a plurality of verification target products, the certification verifying unit determines the plurality of verification target products as counterfeits and determines that the validity of the genuine certification information used in the plurality of verification target products is lost.

6. The apparatus of claim 4, wherein the certification verifying unit re-verifies the validity of the genuine certification information by collecting a genuine certification history for the verification target product, analyzing the collected genuine certification history, and determining whether the verification target product is genuine.

7. The apparatus of claim 1, further comprising:
a certification service providing unit configured to execute the genuine certification for the verification target product and provide a consumer of the verification target product with a result of determining whether the verification target product is genuine or counterfeit.

8. A method of providing a genuine certification service, comprising:
issuing genuine certification information including at least one piece of certification-chip ID information, product ID information, certification secret information, and certification verification information to a verification target product in response to an issuance request by a terminal operated by a producer of the verification target product; and
verifying validity of the genuine certification information issued to the verification target product and executing genuine certification for the verification target product using the genuine certification information of which the validity is verified in response to a certification request by the terminal operated by the producer of the verification target product.

9. The method of claim 8, wherein the issuing includes:
issuing the genuine certification information to the verification target product by generating the genuine certification information including the at least one piece of the certification-chip ID information for a certification chip embedded in the verification target product, the product ID information for the verification target product, the certification secret information to be used to execute the genuine certification, and the certification verification information generated by determining whether the certification secret information is counterfeit.

10. The method of claim 9, wherein the executing includes:
verifying the validity of the genuine certification information by checking whether integrity and confidentiality of the genuine certification information issued to the verification target product is ensured.

11. The method of claim 8, further comprising:
re-verifying the validity of the genuine certification information by monitoring use of the genuine certification information of which the validity is verified and checking whether integrity and confidentiality of the genuine certification information are ensured.

12. The method of claim 11, wherein the re-verifying includes:
determining, when the genuine certification is attempted using the same genuine certification information in a plurality of verification target products, the plurality of verification target products as counterfeits and determining that the validity of the genuine certification information used in the plurality of verification target products is lost.

13. The method of claim 11, wherein the verifying includes:
re-verifying the validity of the genuine certification information by collecting a genuine certification history for the verification target product, analyzing the collected genuine certification history, and determining whether the verification target product is genuine.

14. The method of claim 8, further comprising:
executing the genuine certification for the verification target product and providing a consumer of the verification target product with a result of determining whether the verification target product is genuine or counterfeit.
